Europäisches Patentamt

European Patent Office

Office européen des brevets

(11) Publication number: 0 274 218
A1

# EUROPEAN PATENT APPLICATION

(21) Application number: 87310647.0

(22) Date of filing: 03.12.87

(51) Int. Cl.⁴: G02B 6/10 , G02B 5/20

(30) Priority: 04.12.86 JP 289164/86

(43) Date of publication of application:
13.07.88 Bulletin 88/28

(84) Designated Contracting States:
CH DE FR GB LI

(71) Applicant: SEIKO INSTRUMENTS INC.
31-1, Kameido 6-chome Koto-ku
Tokyo 136(JP)

(72) Inventor: Takesue, Toshiharu
31-1 Kameido
6-chome Koto-ku Tokyo(JP)
Inventor: Takemura, Yasuhiro
31-1 Kameido
6-chome Koto-ku Tokyo(JP)

(74) Representative: Miller, Joseph et al
J. MILLER & CO. Lincoln House 296-302 High
Holborn
London WC1V 7JH(GB)

(54) Wavelength filter.

(57) A wavelength filter comprising a light transmitting member (4) having a waveguide portion (1) which is clad by a cladding portion (2), the waveguide portion (1) and the cladding portion (2) being respectively formed from light transmitting materials having different refractive indices ($n_1$, $n_2$) characterised in that the difference ($\Delta$) between the said refractive indices ($n_1$, $n_2$) varies with the wavelength of light in such a way that the sign of the difference ($\Delta$) is reversed at a predetermined wavelength (c).

FIG. 2(b)

FIG. 2(a)

EP 0 274 218 A1

## "WAVELENGTH FILTER"

This invention relates to a wavelength filter comprising a light transmitting member such, for example, as an optical fibre or a flat waveguide and, although the invention is not so restricted,it relates more particularly to a wavelength filter which may be used in a light transmission line or for optical measurement.

A multiple-frequency optical communication system is known having an optical multiplexer at its transmitting end and an optical wavelength filter at its receiving end. The wavelength filter may, for example, be of the type using a prism, an interference film or a diffraction grating The transmitted light leaving an optical fibre is passed through the wavelength filter and is received by light receivers either through a lens or directly, so that the separation of the light frequencies may be effected. However, the use of an optical fibre and a wavelength filter which are independent of each other not only makes their optical alignment difficult, but also renders the system susceptible to environmental factors such as temperature variation and vibration.

According, therefore, to the present invention, there is provided a wavelength filter comprising a light transmitting member having a waveguide portion which is clad by a cladding portion, the waveguide portion and the cladding portion being respectively formed from light transmitting materials having different refractive indices, characterised in that the difference between the said refractive indices varies with the wavelength of light in such a way that the sign of the difference is reversed at a predetermined wavelength.

In the wavelength range in which the refractive index $n_1$ of the waveguide portion is higher than the refractive index $n_2$ of the cladding portion, light is confined in the guide portion so that light in this wavelength range is propagated through the waveguide portion and the light transmitting member may be said to be used in a waveguide mode. In the wavelength range in which $n_2$ is equal to or higher than $n_1$, however, the intensity of the light decreases as it is propagated through the wave guide portion. In other words, the light transmitting member may be said to be used in a radiation mode in which light leaks out through the boundary surface between the waveguide and cladding portions. Therefore, it is possible to obtain a low-pass wavelength filter if the wavelength range in which $n_1$ is higher than $n_2$ is chosen as a range of short wavelength, while it is possible to obtain a high-pass wavelength filter if the range in which $n_2$ is higher than $n_1$ is chosen as a range of long wavelength.

The light transmitting member may be an optical fibre having a core which constitutes the said waveguide portion.

The waveguide portion may be formed from light transmitting material of high dispersion, the cladding portion being formed from light transmitting material of low dispersion.

Two said light transmitting members which have different predetermined wavelengths may be optically connected to each other in series.

The wavelength filter may act as a band-stop filter which propagates light except for the light between the said different predetermined wavelengths.

The invention also comprises a method of filtering light in which light is transmitted through a light transmitting member having a waveguide portion which is clad by a cladding portion, the waveguide portion and the cladding portion being respectively formed from light transmitting materials having different refractive indices characterised in that the difference between the refractive indices varies with the wavelength of light in such a way that the sign of the difference is reversed at a predetermined wavelength so that the light transmitting member transmits light only in a predetermined range of wavelengths.

The invention is illustrated, merely by way of example, in the accompanying drawings, in which:-

Figure 1 is a graph showing how the refractive index of each of two different glass materials which may be employed for making a wavelength filter according to the present invention varies with wavelength;

Figure 2(a) is a transverse sectional view of an optical fibre which may constitute a wavelength filter according to the present invention;

Figure 2(b) is a longitudinal sectional view of the optical fibre shown in Figure 2(a);

Figure 3 is a graph showing the wavelength dependence of the critical angle $\theta_{10}$ of the angle of incidence $\theta_1$ to the boundary between the waveguide portion and the cladding portion of a wavelength filter according to the present invention; and

Figure 4 is a graph showing how the refractive index of each of two different glass materials forming another wavelength filter according to the present invention varies with wavelength.

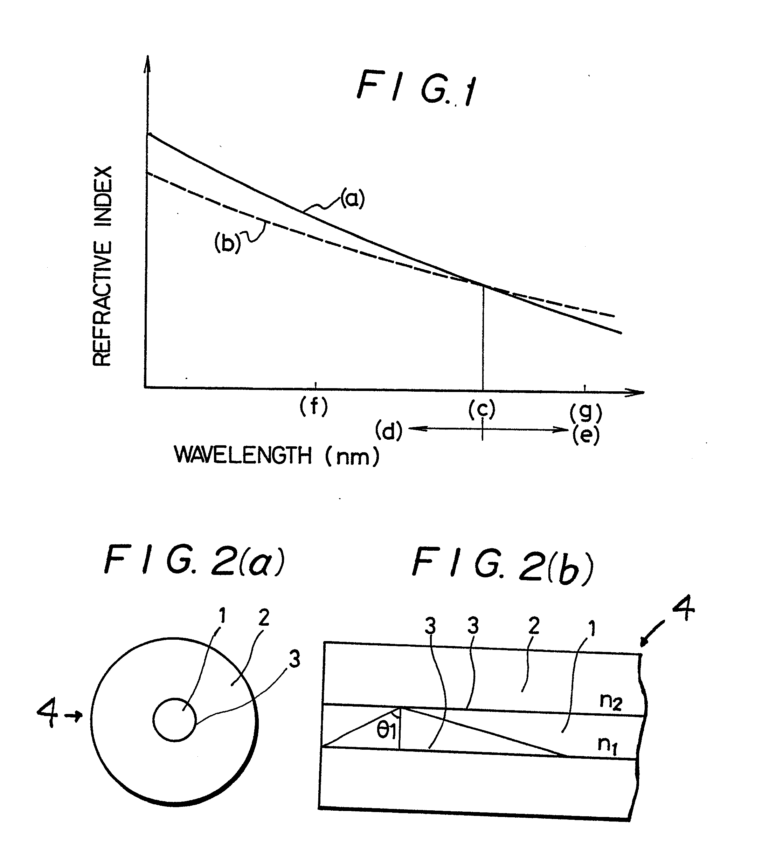

Figure 2(a) shows the transverse section of an optical fibre 4 and Figure 2(b) shows its longitudinal section. The optical fibre 4 has a core portion or waveguide portion 1 which has a refractive index $n_1$, the core portion 1 being clad by a cladding portion 2 which has a refractive index $n_2$. The core portion 1 of the optical fibre 4 may, for example, be formed from a glass material of high dispersion, and the cladding portion 2 may, for example, be formed from a glass material of low dispersion.

Figure 1 shows the variation of the refractive index of each of the two glass materials with respect to wavelength. The refractive index of the core portion 1 shown by a curve (a), and that of the cladding portion 2 by a curve (b). As will be seen from Figure 1, the refractive indices of the portions 1, 2 are equal to each other at a wavelength (c). The wavelength (c) defines a boundary between a range (d) of short wavelength, in which the refractive index of the core portion 1 is higher than that of the cladding portion 2, and a range (e) of long wavelength in which the refractive index of the core portion 1 is lower than that of the cladding portion 2. The core portion 1 is usually incapable of confining light if the incident angle $\theta_1$ to the boundary surface 3 between the core portion 1 and the cladding portion 2 as shown in Figure 2(a), Figure 2(b) is larger than

$$\sin^{-1}\left[\frac{n_2}{n_1}\right] \ .$$

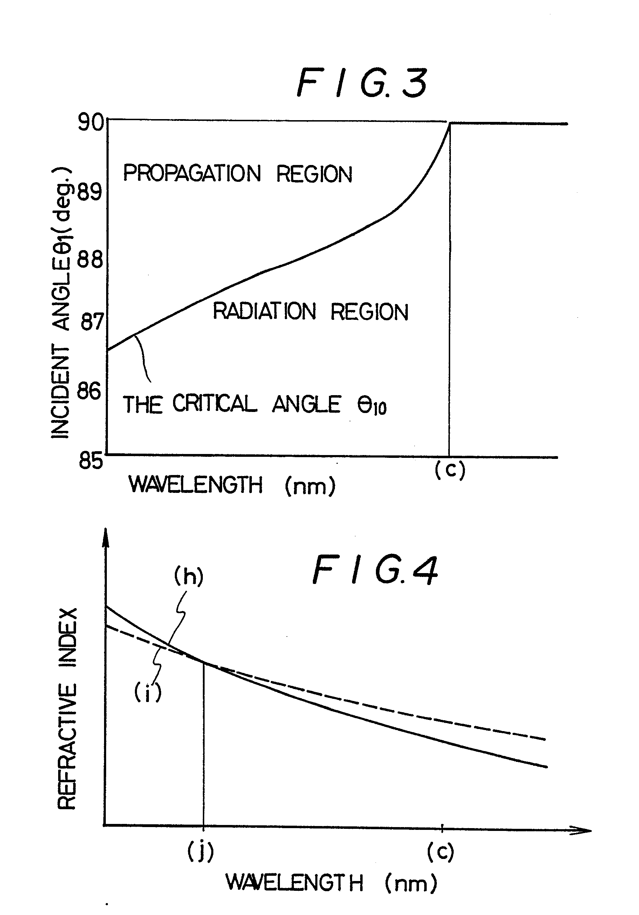

Figure 3 is a graph which is based on the relationship between $n_1$ and $n_2$ shown in Figure 1 and which shows the wavelength dependence of the critical angle $\theta_{10}$, or the angle at which the angle of incidence $\theta_1$ is equal to

$$\sin^{-1}\left[\frac{n_2}{n_1}\right] \ .$$

The critical angle $\theta_{10}$ defines a boundary between a radiation region in which $\theta_1$ is smaller than

$$\sin^{-1}\left[\frac{n_2}{n_1}\right]$$

and a propagation region in which $\theta_1$ is larger than

$$\sin^{-1}\left[\frac{n_2}{n_1}\right] \ .$$

In the radiation region, light is radiated from the core portion 1 and is not propagated, while in the propagation region, light is propagated because it is reflected on the boundary surface 3. It, therefore, follows that with a shift from the short wavelength range to the long wavelength range, light propagation to the cladding portion 2 in the propagation mode increases, with a resultant increase in spot size (i.e. the width of extension of the electromagnetic field in the waveguide) until the wavelength (c) where the spot size extends to the infinite. Thus, it is possible to obtain a low-pass filter in which wavelengths longer than the wavelength (c) are cut off and wavelengths shorter than the wavelength (c) are propagated.

If this filter is connected by fusion or by means of a connector to the receiving end of a multiple-frequency optical communication system utilizing the frequencies (f) and (g) as shown in Figure 1 by way of example, it is possible to separate, with a good signal-to-noise ratio (SNR), only the signal which has been transmitted at the frequency (f). On the other hand, it is possible to obtain a high-pass filter in which wavelengths shorter than the wavelength (c) are cut off and wavelengths longer than the wavelength (c) are propagated, if a glass material of low dispersion is used for the core portion 1 and a glass material of high dispersion is used for the cladding portion 2, and if the refractive index of the cladding portion 2 takes the curve (a) as shown in Figure 1 and that of the core portion 1 takes the curve (b). This filter can separate, with a good SNR, only the signal which has been transmitted at the wavelength (c) when used in the multiple-frequency optical communication system utilizing the frequencies (f) and (g) as described above.

Although the core and cladding portions have been described as being formed from glass materials of high and low dispersion respectively, this invention does not, of course, preclude the use of a combination of only glass materials of high or low dispersion if the refractive indices of the core and cladding materials vary in such a way that the sign which their difference has at a wavelength lower than a pre-selected level such as shown as (c) in Figure 1 is reversed at a wavelength higher than the wavelength (c). Thus the material F11 of Ohara Kogakugarasu Seizojo Co. can be used as a high dispersion glass material and the material SSK3 of Ohara Kogakugarasu Seizojo Co. can be used as a low dispersion glass material.

Another wavelength filter embodying this invention is shown in Figure 4. It is formed from two kinds of glass materials having different refractive indices (h) and (i) and having a cut-off wavelength as shown at (j). If this filter is optically connected to the filter having the characteristics shown in Figure 1, it is possible to construct a band filter having two cut-off wavelengths (j) and (c).

When a first wavelength filter, which is composed of a core portion and a cladding portion of glass materials having characteristics such as (a) and (b) respectively as shown in Figure 1, is connected to a second wavelength filter which is composed of a core portion and a cladding portion of glass materials having characteristics such as (i) and (h) respectively as shown in Figure 4, a band-pass filter is provided which propagates light only between the wavelengths (j) and (c).

Moreover, when a third wavelength filter, which is composed of a core portion and a cladding portion of glass materials such as (b) and (a) respectively as shown in Figure 1, is connected to a fourth wavelength filter which is composed of a core portion and a cladding portion of glass materials such as (h) and (i) respectively as shown in Figure 4, a band-stop filter is provided which propagates light except for the light between the wavelength (j) and wavelength (c).

Although the filter of this invention has been described as utilizing glass materials it is, of course, possible to use any other combination of light transmitting materials as long as they can produce similar results. Further, although the invention has been described with reference to an optical fibre, it is also applicable to a planar waveguide.

The invention enables a wavelength filter to be produced which is simple in construction and can withstand any environmental change without requiring any adjustment, and which is suitable for spectroscopic measurement, multiplex operation, etc.

## Claims

1. A wavelength filter comprising a light transmitting member (4) having a waveguide portion (1) which is clad by a cladding portion (2), the waveguide portion (1) and the cladding portion (2) being respectively formed from light transmitting materials having different refractive indices ($n_1$, $n_2$) characterised in that the difference ($\Delta$) between the said refractive indices ($n_1$, $n_2$) varies with the wavelength of light in such a way that the sign of the difference ($\Delta$) is reversed at a predetermined wavelength (c).

2. A wavelength filter as claimed in claim 1 characterised in that the light transmitting member (4) is an optical fibre having a core (1) which constitutes the said waveguide portion.

3. A wavelength filter as claimed in claim 1 or 2 characterised in that the waveguide portion (1) is formed from light transmitting material of high dispersion, the cladding portion (2) being formed from light transmitting material of low dispersion.

4. A wavelength filter as claimed in any preceding claim characterised in that two said light transmitting members (4) which have different predetermined wavelengths (c), (j) are optically connected to each other in series.

5. A wavelength filter as claimed in claim 4 characterised in that the wavelength filter acts as a band-stop filter which propagates light except for the light between the said different predetermined wavelengths (c) (j).

6. A method of filtering light in which light is transmitted through a light transmitting member (4) having a waveguide portion (1) which is clad by a cladding portion (2), the waveguide portion (1) and the cladding portion (2) being respectively formed from light transmitting materials having different refractive indices ($n_1$, $n_2$) characterised in that the difference ($\Delta$ between the refractive indices ($n_1$, $n_2$) varies with the wavelength of light in such a way that the sign of the difference ($\Delta$) is reversed at a predetermined wavelength (c) so that the light transmitting member (4) transmits light only in a predetermined range of wavelengths

7. A wavelength filter comprising a light waveguide path device such as an optical fibre or a planar waveguide, the waveguide portion (1) of said device and its cladding portion (2) being formed from materials having different refractive indices $n_1$, $n_2$ respectively, their difference $\Delta = (n_1 - n_2)$ varying with the wavelength of light in such a manner that the sign of said difference at a wavelength lower than a pre-selected level is reversed at a wavelength higher than said level.

# F I G. 1

REFRACTIVE INDEX

(a)

(b)

(f)　　　　(c)　　(g)

(d) ←――――――→ (e)

WAVELENGTH (nm)

# F I G. 2(a)

1　2

3

4→

# F I G. 2(b)

3　3　2　1　　4

$n_2$

$\theta_1$

$n_1$

# F I G. 3

INCIDENT ANGLE $\theta_1$ (deg.)

90

PROPAGATION REGION

89

88

87 RADIATION REGION

86

THE CRITICAL ANGLE $\theta_{10}$

85

(c)

WAVELENGTH (nm)

# F I G. 4

REFRACTIVE INDEX

(h)

(i)

(j)     (c)

WAVELENGTH (nm)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 244 075 (RICHARDS et al.) * column 2, line 71 - column 3, line 15; column 7, line 37 - column 8, line 35; figures 5-8 * | 1-3,6,7 | G 02 B 6/10 G 02 B 5/20 |
| Y | HECHT + ZAJAC "Optics", 1974, pages 38-42, Addison-Wesley Publishing Co., Inc, US; * page 42, figure 3.13 * | 1,2 | |
| Y | G. KEISER "Optical Fiber Communications", 1983, pages 273-276, McGraw-Hill Inc., Singapore; * page 274, line 5 - page 275, line 2 * | 1,2 | |
| A | US-A-4 341 442 (JOHNSON) * column 4, lines 2-9; column 6, lines 59-59; figure 4; claims * | 4,5 | |
| A | US-A-4 139 262 (MAHLEIN et al.) | | |
| A | DE-A-2 442 724 (SIEMENS AG) | | TECHNICAL FIELDS SEARCHED (Int. Cl.4) G 02 B 6/00 G 02 B 5/00 |

The present search report has been drawn up for all claims

| Place of search | Date of completion of the search | Examiner |
|---|---|---|
| BERLIN | 02-03-1988 | KEMSLEY E.E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)